# EUROPEAN PATENT APPLICATION

(11) **EP 1 172 730 A2**
(43) Date of publication of application: **16.01.2002**
(21) Application number: 01115777.3
(22) Date of filing: 10.07.2001
(51) Int. Cl.: G06F 11/36

(54) **One-chip system large-scale integrated circuit including processor circuit and its pheripheral circuits**

(30) Priority: 10.07.2000 JP 2000208601
(71) Applicant: Kabushiki Kaisha Toshiba, Tokyo 105-8001 (JP)
(72) Inventor: Saito, Toshitada, Yokohama-shi, Kanagawa-ken (JP)
(74) Representative: HOFFMANN - EITLE

(57) **Abstract**

A one-chip system large-scale integrated circuit comprises: a storage circuit in which a program has been stored; a processor circuit for processing an operation in accordance with the program using a program counter, a computing unit and a register; and a peripheral circuit, capable of sending and receiving a signal to and from the processor circuit using at least one functional block, for carrying out a predetermined logical operation in accordance with an input signal. The processor circuit further comprises: a selection element for optionally selecting one of the outputs of the program counter, the computing unit and the register, at least one output of the storage circuit, and one of the outputs of a plurality of internal signals in the peripheral circuit including the output of the functional block; and a monitor control element for controlling selection of a result signal from any operation process in any place of the processor circuit, the storage circuit and the peripheral circuit, on the basis of an external monitor signal which is supplied from the outside of the system LSI via an external terminal. Thus, when the debug of the one-chip system LSI is monitored, a region and operation process having caused a bug can be precisely monitored, so that it is possible to carry out an efficient debug.

## Description

### BACKGROUND OF THE INVENTION

The present invention relates generally to a one-chip system large-scale integrated circuit including a processor circuit and its peripheral circuit. More specifically, the invention relates to a debug monitoring function capable of easily and surely verifying operation and monitoring debug of a firmware in real time in a real-time system large-scale integrated circuit which comprises a processor circuit, such as a microprocessor unit, and its peripheral circuit in one chip.

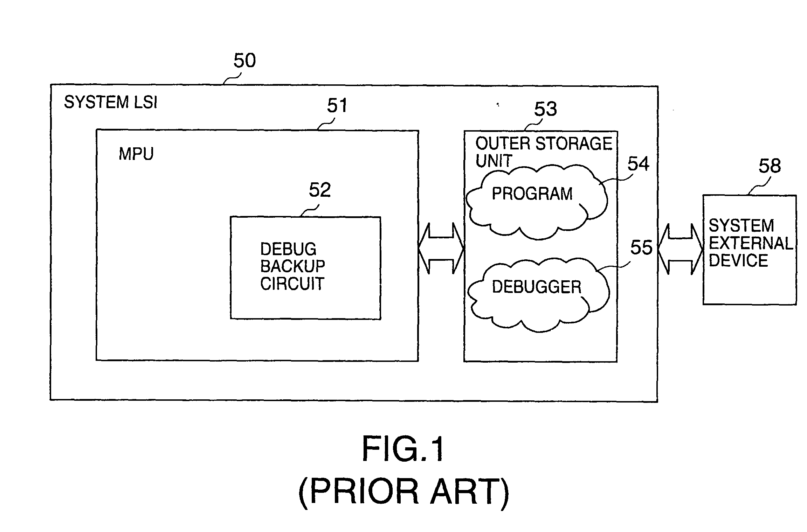

Recently, microprocessor units (which will be briefly hereinafter referred to as MPUs) have very complicated functions, and it is not easy to precisely analyze their operation. For that reason, in recent years, as shown in FIG. 1, a system large-scale integrated circuit (which will be briefly hereinafter referred to as an LSI) 50 serving as a systematized LSI is often provided with an MPU 51 which is operated by a software called a debugger 55, provided in an outer storage unit 53 with other programs 54, for supporting analysis of operation, or an MPU 51 in which a debug backup (support or aid) circuit 52 coordinating with the debugger 55 to operate is previously incorporated.

In the system LSI 50, when the MPU 51 serving as a processor circuit, a peripheral circuit and storage are intended to carry out predetermined operations, logical operations, and read and writing operations, there are some cases where it is not possible to carry out a predetermined logical operation, a predetermined logical operation or a predetermined reading or writing operation for some reason. The cause of such operation failure is called bug (defect/failure). The debugger 55 and the debug backup circuit 52 can analyze operation in the system LSI 50 to detect the places of bugs to remove the bugs.

Therefore, if the debugger 55 and the debug backup circuit 52 are provided, the debugger 55 and the debug backup circuit 52 can easily make the tracing of a program, execute steps and set a break point and a scan chain, and can verify the operation of the MPU 51 in detail from a system external device 58 which is provided outside of the chip of the system LSI.

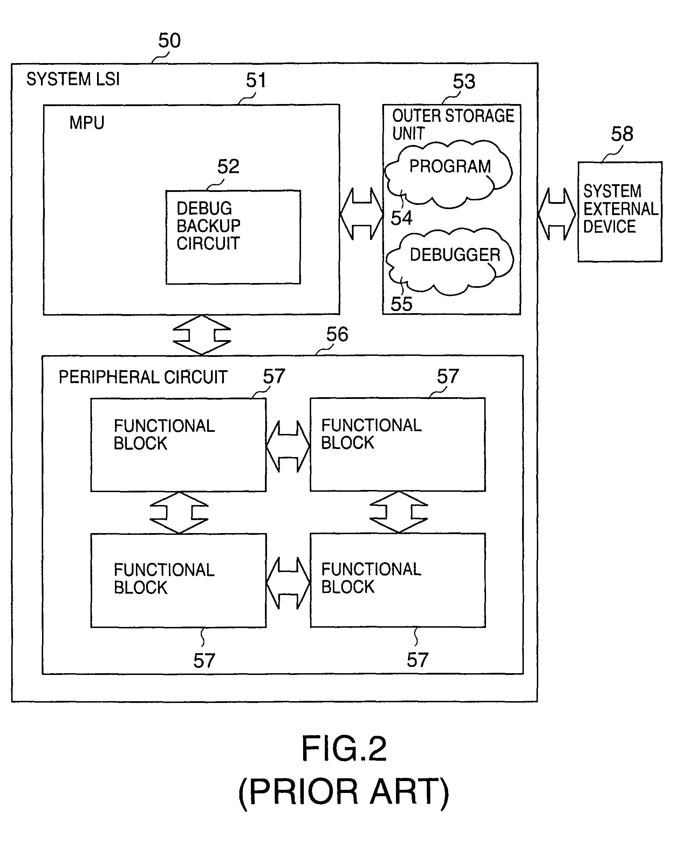

On the other hand, as shown in FIG. 2, when the operation of the system LSI 50 including the MPU 51 and a peripheral circuit 56 is analyzed, if the system has a strong real-time property, only the debug using the execution of steps and the break point is difficult to maintain the consistency of timing with the system external device 58 and the peripheral circuit 56, so that it is difficult to sufficiently reproduce the operation of the system LSI 50. That is, with respect to the debug of the single MPU 51 in the system LSI 50, it is possible to verify operation by means of the debug backup circuit 52 such as the conventional debugger 55, but the exchange of signals between the MPU 51 and its peripheral circuit can not be debugged in detail.

Furthermore, the peripheral circuit 56 is provided with a plurality of functional blocks 57 for exchanging signals. In the system LSI 50 including a plurality of MPU cores as a processing unit, it is difficult to directly monitor internal signals in the LSI 50, and the timing with the peripheral circuit 56 including the plurality of functional block 57 is restrained, so that it is difficult to verify operation by means of the above described single debugger 55 for verifying the operation of the MPU 51.

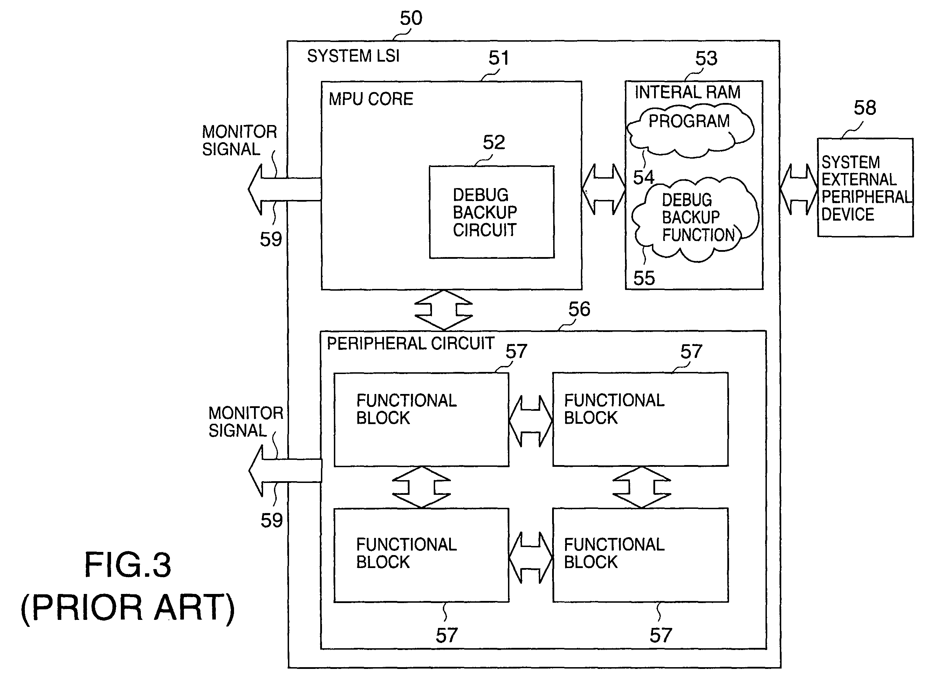

Moreover, as shown in FIG. 3, if terminals 59 only for monitoring are newly provided in order to monitor internal signals in the LSI 50, the number of pins increases by the number of the increased terminals, so that the kinds of signals to be monitored must be restricted due to the constraint of the number of pins of the LSI 50. That is, there is the possibility that an object to be debugged may be restricted by the constraint of the number of pins. The LSI including the plurality of functional blocks 57 includes a circuit which is called a scan chain for applying an initial state to system internal circuits, such as the MPU 51 serving as the processor circuit and the peripheral circuit 56, and conversely, for reading the state of the internal circuits to the outside, and which has been utilized to analyze operation for debug.

### SUMMARY OF THE INVENTION

It is therefore an object of the present invention to eliminate the aforementioned problems and to provide a one-chip system large-scale integrated circuit capable of efficiently debugging a processor circuit and a peripheral circuit by precisely monitoring which region have bugs and which operation process causes bugs when the processor circuit and the peripheral circuit in the one-chip system LSI are monitored to be monitored.

In order to accomplish the aforementioned and other objects, according to the present invention, a one-chip system LSI comprises: a storage circuit in which at least one program has been stored; at least one processor circuit for carrying out a processing operation in accordance with the program, the processor circuit having a program counter, at least one computing unit and at least one register; and a peripheral circuit, capable of sending and receiving a signal to and from the processor circuit, for carrying out a predetermined logical operation in accordance with an input signal, the peripheral circuit having at least one functional block, the system LSI further comprising: selection means for optionally selecting one of the outputs of the program counter, the computing unit and the register in the processor circuit, at least one output of the storage circuit, and one of the outputs of a plurality of internal signals in the peripheral circuit including the output of the functional block; and selection control means for controlling selection of a result signal from any operation process in any place of the processor circuit, the storage circuit and the peripheral circuit, on the basis of a selection signal which is supplied from the outside of the system LSI via an external terminal.

With the above described construction, the selection means can be controlled on the basis of the selection signal which is inputted via the selection control means to precisely grasp a place, which is being debugged, and a logical process, which is being debugged, to select and take out the signal output, so that it is possible to precisely detect a place and operation process as to which logical element and which logical portion cause a bug. According to one aspect of the present invention, the selection means is designed to be capable of selecting and outputting a signal in any process in any component of the LSI, such as the processor circuit, the storage circuit or the peripheral circuit. According to another aspect of the present invention, the selection means may have a cascade construction wherein the processor circuit and the storage circuit are provided with first selection means, the peripheral circuit is provided with second selection means, and third selection means is provided for selecting a selected one of the output signals of the first and second selection means.

That is, according to the other aspect of the present invention, the processor circuit has a program counter, at least one computing unit, at least one register, and first selection means for optionally selecting and outputting at least one value of the program counter, the computing unit, the register and the storage circuit, and the peripheral circuit has second selection means for optionally selecting and outputting one of a plurality of internal signals in the peripheral circuit, which include the output of the functional block, third selection means being provided for optionally selecting one of the outputs of the first and second selection means to output the selected one to the outside.

According to this aspect, it is possible to optionally select and output any one of the signal in the processor circuit and the signal in the peripheral circuit, so that it is possible to analyze the internal state of the semiconductor integrated circuit in real time. According to another aspect of the present invention, the selection of the first through third selection means is optionally switched by the control of the selection control means. With this construction, the selection control means can be controlled by a signal from the outside to control the selection of the first through third selection means from the outside.

According to a further aspect of the present invention, the selection of the second and third selection means may be switched on the basis of the control signal which is generated while the processor circuit is operating, so that it is possible to analyze in real time by monitoring the most suitable signal for the operation state of the processor circuit. According to another aspect of the present invention, it is possible to analyze the internal state of each of a plurality of processor circuits even if the plurality of processor circuits are provided.

According to a still further aspect of the present invention, the selected signal may be serial/parallel converted or thinned out to be outputted. Thus, the data rate of the signal to be monitored can be lowered, so that it is possible to prevent the omission of signals to be monitored. If the selected signal is parallel/serial converted to be outputted, the data rate of the signal to be monitored can be enhanced, and the number of monitoring terminals can be reduced.

### BRIEF DESCRIPTION OF THE DRAWINGS

In the drawings:
FIG. 1 is a block diagram for explaining a conventional debugging technique;
FIG. 2 is a block diagram showing a conventional system having an MPU serving as a processor circuit and a peripheral circuit;
FIG. 3 is a block diagram showing the construction of a conventional system LSI having terminals only for monitoring;
FIG. 4 is a block diagram showing the construction of the first preferred embodiment of a system LSI according to the present invention as a basic concept;
FIG. 5 is a block diagram showing the internal construction of the second preferred embodiment of a system LSI according to the present invention;
FIG. 6 is a block diagram showing the internal construction of the third preferred embodiment of a system LSI according to the present invention;
FIG. 7 is a block diagram showing the internal construction of the fourth preferred embodiment of a system LSI according to the present invention;
FIG. 8 is a block diagram showing the internal construction of the fifth preferred embodiment of a system LSI according to the present invention;
FIG. 9 is a block diagram showing the internal construction of the sixth preferred embodiment of a system LSI according to the present invention;
FIG. 10 is a diagram showing a data format of a monitor signal which is outputted from a parallel/serial converter; and
FIG. 11 is a block diagram showing the internal construction of the seventh preferred embodiment of a system LSI according to the present invention.

### DESCRTPTION OF THE PREFERRED EMBODIMENTS

Referring now to the accompanying drawings, the preferred embodiments of a semiconductor integrated circuit according to the present invention will be described below. An example of a system LSI comprising an MPU core and its peripheral circuit in one chip will be described below.

### (First Preferred Embodiment)

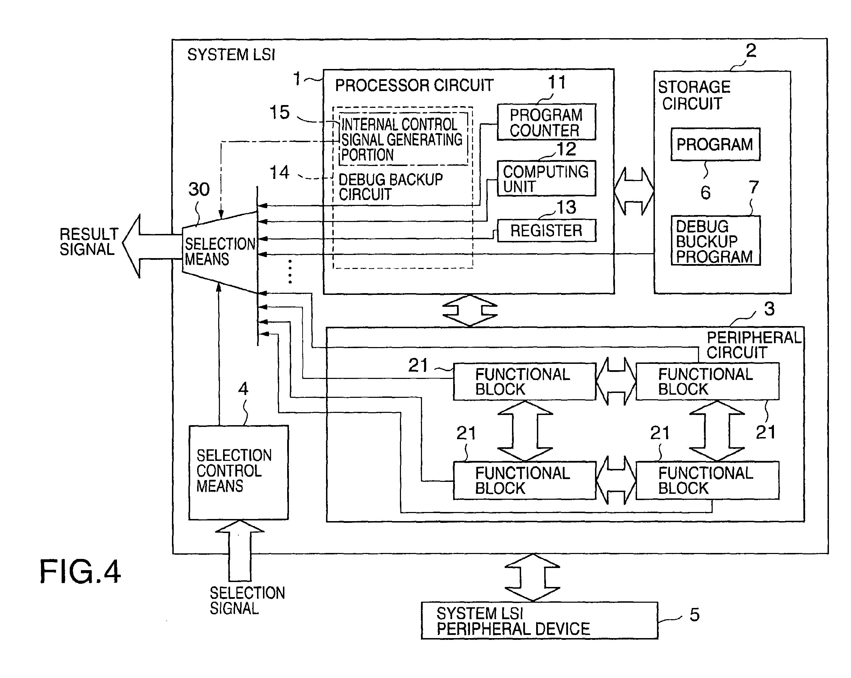

Before separate preferred embodiments are described, the first preferred embodiment of a system LSI according to the present invention, which includes the construction of a one-chip system LSI as the basic concept of the present invention, will be described referring to FIG. 4.

In FIG. 4, the first preferred embodiment of a one-chip system large-scale integrated circuit (LSI) according to the present invention comprises: a storage circuit 2 in which a program 6 and a debug backup (support or aid) program 7 have been stored; a processor circuit 1 which has a program counter 11, at least one computing unit 12 and at least one register 13 and which carries out a processing operation in accordance with the program 2; and a peripheral circuit 3 which has a plurality of functional blocks 21 and which is able to send and receive signals to and from the processor circuit 1, the peripheral circuit 3 carrying out a predetermined logical operation in accordance with an input signal.

In addition to such a basic construction, the system LSI further comprises: selection means 30 for optionally selecting any one of outputs from the program counter 11, the computing unit 12 and the register 13 in the processor circuit 1, at least one output of the storage circuit 2, and any one of outputs of a plurality of internal signals in the peripheral circuit 3 including the output of the functional block 21, to output the selected output to an external terminal; and selection control means 4 for controlling the selection of the result signal from any operation process in any one of the processor circuit 1, the storage circuit 2 and the peripheral circuit 3 on the basis of a selection signal which is supplied from the outside of the system LSI via the external terminal.

With the above described construction, it is possible to surely recognize which region of the processor circuit 1, storage circuit 2 and peripheral circuit 3, which are operating in the system LSI, has a bug and which operation process causes the bug, on the basis of the assignment of the place by the selection signal and the output contents of the result signal, so that it is possible to provide an excellent debug function. Furthermore, the selection signal is obtained by simply taking out a predetermined result signal, which is outputted from the outside to a specific region of each internal component circuit via an input pin of the system LSI, to the outside via the selection means 30. The selection control means 30 does not carry out any special control operations, and is designed to output a selection signal, which is inputted only to assign a place to be monitored, to the selection means 33 so as to be able to assign a place, in which the selection means 33 can output a result signal from any operation process in any place of internal component circuits, and an operation stage in any operation process.

As a modified example of the construction of the system LSI according to the basic concept of the present invention, the preferred embodiments of the present invention will be described below in detail.

### (Second Preferred Embodiment)

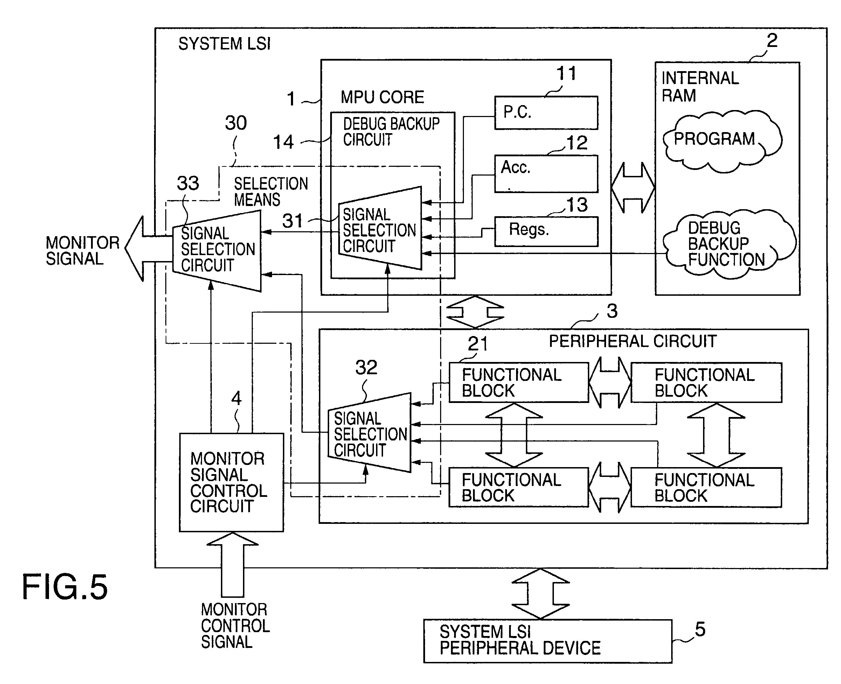

FIG. 5 is a block diagram showing the internal construction of a system LSI serving as the second preferred embodiment of a semiconductor integrated circuit according to the present invention. The system LSI shown in FIG. 5 comprises: an MPU (Microprocessor Unit, processor circuit) core 1; an internal RAM (random access memory/storage circuit) 2 in which a program for operating the MPU core 1 has been stored; a peripheral circuit 3 for sending and receiving signals to and from the MPU core 1; and a monitor signal control circuit 4 for selecting any one of a plurality of monitor signals.

The system LSI is connected to a system LSI peripheral device, so that both send and receive signals to and from another. The internal RAM 2 includes a debug backup functional program in addition to a program for operating the MPU core 1. In the MPU core 1 similar to a usual MPU, there are provided a program counter (PC) 11, an accumulator (Acc/computing unit) 12, various registers (Regs) 13, and a debug backup circuit 14. Usually, a plurality of accumulators 12 and a plurality of registers 13 are provided. The registers 13 include general purpose registers, instruction registers and flag registers.

The peripheral circuit 3 includes at least one functional block 21. Each functional block 21 is designed to send and receive signals to and from each other, and send and receive signals to and from the MPU core 1. Each functional block 21 comprises a logic circuit or a combinational circuit, such as a gate circuit or a flip-flop circuit.

The system LSI in this second preferred embodiment is provided with first through third signal selection circuits 31, 32 and 33 as the selection means 30. The first signal selection circuit (first selection means) 31 is provided in the debug backup circuit 14 included in the MPU core 1. The second signal selection circuit (second selection means) 32 is provided in the peripheral circuit 3. The third signal selection circuit (third selection means) 33 is provided so as to receive the outputs of the first and second signal selection circuits 31 and 32 to select a final monitor signal. This preferred embodiment is characterized in that the three signal selection circuits 31 through 33 are provided, and in that the monitor signal control circuit 4 is provided for controlling the selecting operation of each of the first through third signal selection circuits 31 through 33.

The first signal selection circuit 31 provided in the debug backup circuit 14 is designed to select and output one of the values of the program counter 11, the accumulator 12, the various registers 13 and the internal RAM 2 on the basis of the control signal from the monitor signal control circuit (selection control means) 4.

The second signal selection circuit 32 provided in the peripheral circuit 3 is designed to select and output one of the outputs of the functional blocks 21 on the basis of the control signal from the monitor signal control circuit 4.

The third signal selection circuit 33 is designed to select and output one of the outputs of the signal selection circuits 31 and 32 which are provided in the MPU core 1 and the peripheral circuit 3, respectively. The signal selected by the signal selection circuit 33 is supplied to the monitoring terminal of the system LSI.

The number of objects to be selected by each of the signal selection circuits 31 through 33 should not always be one. For example, when a plurality of monitoring terminals are provided, a plurality of selected objects can be supplied to different monitoring terminals, respectively. The monitoring terminals should not always be terminals only for monitoring, terminals functioning as input terminals and/or output terminals during usual operation of the system LSI may be temporarily applied.

The debug backup circuit 14 in the MPU core 1 is designed to carry out debug on the basis of the debug backup functional program which has been stored in the internal RAM 2. The monitor signal control circuit 4 is designed to select one of the signal selection circuit 31 through 33 on the basis of a monitor control signal which has been supplied from the outside. Thus, it is possible to switch the internal state in the MPU core 1 and peripheral circuit 3 in optional timing to monitor the internal state.

Thus, the first preferred embodiment has the first signal selection circuit 31 for selecting any one of the internal signals of the MPU core 1, the signal selection circuit 32 for selecting any one of the internal signals of the peripheral circuit 3, and the signal selection circuit 33 for selecting any one of the outputs of the signal selection circuits 31 and 32, and can optionally switch the selecting operation of each of the signal selection circuits 31 through 33 if necessary, so that it is possible to analyze the internal operation of each of the signal selection circuits 31 through 33 in real time in detail. If the number of monitoring terminals is limited, the plurality of monitor signals can be easily switched to be outputted, so that it is possible to improve the efficiency of debug.

### (Third Preferred Embodiment)

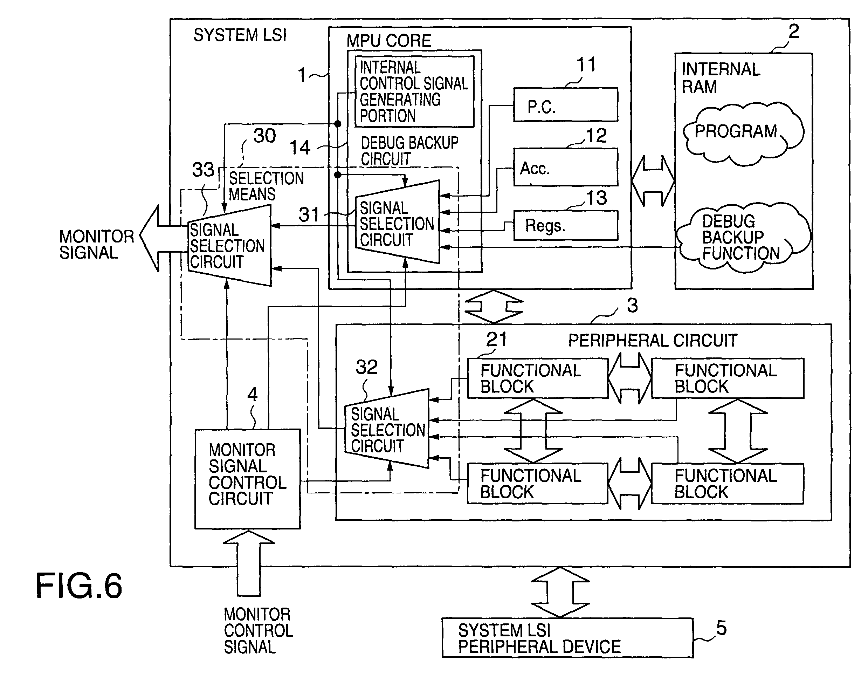

In the third preferred embodiment of the present invention, the operation state of the MPU core 1 is taken into consideration to select a signal to be monitored. FIG. 6 is a block diagram showing the internal construction of a system LSI serving as the third preferred embodiment of a semiconductor integrated circuit according to the present invention. In FIG. 6, the same reference numbers are given to components corresponding to those in FIG. 5. Different points will be mainly described below.

The system LSI in FIG. 6 has the same basic construction as that of the system LSI in FIG. 5, and is different from the system LSI in FIG. 5 at the point that a control signal is supplied from the MPU core 1 to the first through third signal selection circuits 31 through 33. The control signal from the MPU core 1 is generated from an internal control signal generating portion 15, and is a signal indicative of the current operation state of the MPU core 1. The control signal transmitted from the signal generating portion 15 is outputted to the first signal selection circuit 31 which is provided in the debug backup circuit 14 in the MPU core 1, the second signal selection circuit 32 which is provided in the peripheral circuit 3, and the first signal selection circuit 33. The first through third signal selection circuits 31 through 33 are designed to select a monitor signal on the basis of an external monitor control signal from the monitor signal control circuit 4 and a control signal from the internal control signal generating portion 15 of the MPU core 1, and specifically, select the optimum monitor signal in accordance with the operation state of the MPU core 1.

Thus, in the third preferred embodiment, the monitor signal is selected by taking account of the control signal from the MPU core 1 in addition to the control signal from the monitor signal control circuit 4, so that it is possible to switch the monitor signal in accordance with the operation state of the MPU core 1. That is, it is possible to always monitor the required signal, so that it is possible to improve the efficiency of debug. Furthermore, the monitor signal may be selected in accordance with only the control signal from the MPU core 1, without using the control signal from the monitor signal control circuit 4. In this case, it is possible to carry out debug even if the monitor signal is not inputted from the outside.

### (Fourth Preferred Embodiment)

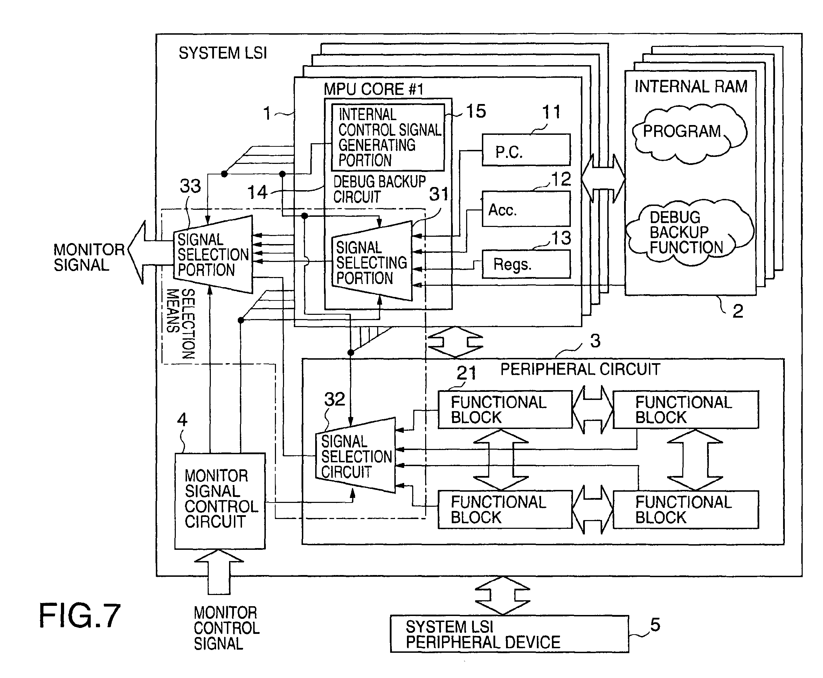

In the fourth preferred embodiment of the present invention, a system LSI having a plurality of MPU cores 1 is debugged. FIG. 7 is a block diagram showing the internal construction of a system LSI serving as the fourth preferred embodiment of a semiconductor integrated circuit according to the present invention. In FIG. 7, the same reference numbers are given to components corresponding to those in FIG. 6. Different points will be mainly described below.

The system LSI in FIG. 7 has a plurality of MPU cores 1, and a plurality of internal RAMs 2 in which a program for operating each of the MPU cores 1 has been stored. Each of the MPU cores 1 has a signal selection circuit 31. The signal selection circuit is designed to select one of the output of the signal selection circuit 31 of each of the MPU cores 1, and the output of the signal selection circuit 32 in the peripheral circuit 3.

Similar to FIG. 6, the signal selection circuits 31, 32 and 33 in FIG. 7 are designed to carry out a selecting operation on the basis of the control signal from the monitor signal control circuit 4 and the control signal from the MPU core 1. Therefore, it is possible to switch the monitor signal in real time in accordance with the operation state of the MPU core 1.

Thus, in the fourth preferred embodiment, when the plurality of MPU cores 1 are provided in the system LSI, each of the MPU cores 1 is provided with the signal selection circuit 31, and any one of the signal selection circuits 31 can be optionally selected, so that the operation state of each of the MPU cores 1 can be monitored in real time. In addition, since the signal selection circuits 32 and 33 are designed to select the monitor signal in accordance with the operation state of each of the MPU cores 1, it is possible to monitor the most suitable signal for debugging, so that it is possible to enhance the efficiency of debug.

### (Fifth Preferred Embodiment)

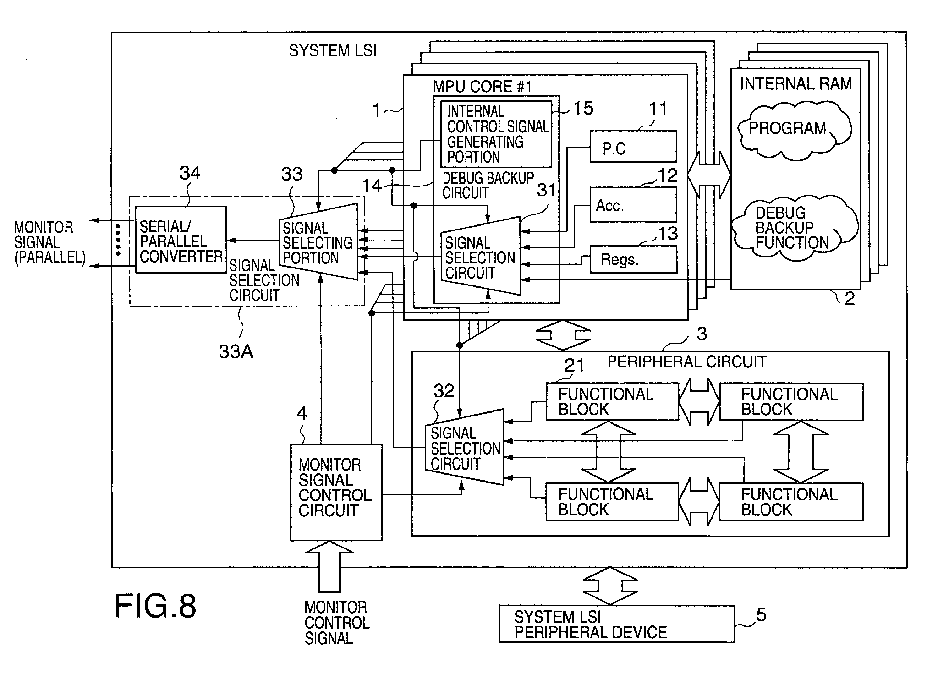

In the fifth preferred embodiment of the present invention, a monitor signal is serial/parallel converted to be outputted from a plurality of terminals. FIG. 8 is a block diagram showing the internal construction of a system LSI serving as the fifth preferred embodiment of a semiconductor integrated circuit according to the present invention. In FIG. 8, the same reference numbers are given to components corresponding to those in FIG. 7. Different points will be mainly described below.

In the system LSI in the fifth preferred embodiment shown in FIG. 8, a third signal selection circuit 33A comprises a signal selecting portion 33, and a serial/parallel converter 34 for serial/parallel converting an output signal from the signal selecting portion 33. Other constructions are the same as those in FIG. 7. The output of the serial/parallel converter 34 is supplied to a plurality of monitoring terminals.

If the monitor signal is serial/parallel converted to be supplied to the plurality of monitoring terminals, the frequency (data rate) of the monitor signal can be substantially lowered, so that it is possible to monitor the signal without omission even if the monitor signal is suddenly varied.

### (Sixth Preferred Embodiment)

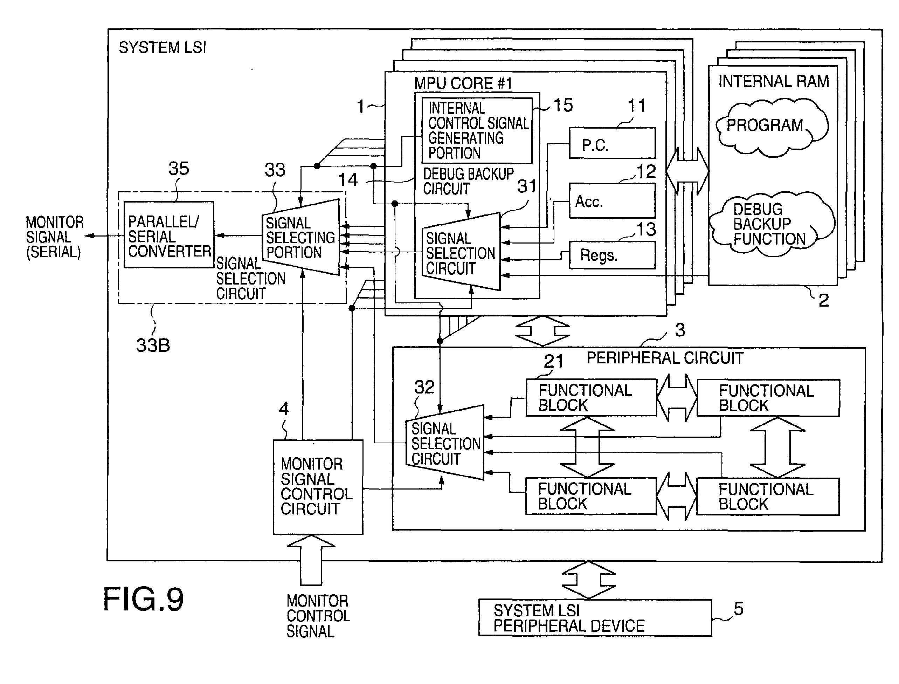

Contrary to the fifth preferred embodiment, in the sixth preferred embodiment of the present invention, a plurality of signals to be monitored are supplied to monitoring terminals after being parallel/serial converted. FIG. 9 is a block diagram showing the internal construction of a system LSI serving as the sixth preferred embodiment of a semiconductor integrated circuit according to the present invention. In FIG. 9, the same reference numbers are given to components corresponding to those in FIG. 7. Different points will be mainly described below. A third signal selection circuit 33B in FIG. 9 comprises a signal selecting portion 33, and a parallel/serial converter 35 for parallel/serial converting the output of the signal selecting portion 33.

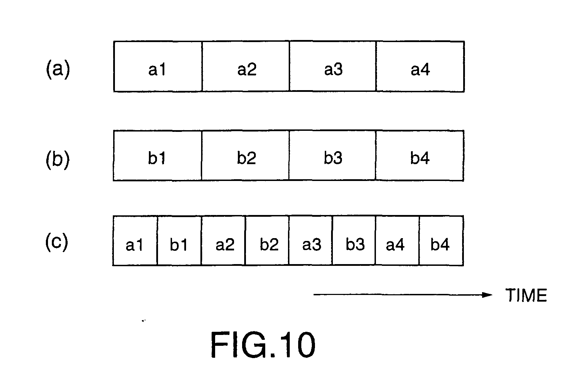

The signal selection circuit 33 in FIG. 9 is designed to output at least two kinds of monitor signals. These monitor signals are inputted to the parallel/serial converter 35 to be converted into a single monitor signal to be supplied to the monitoring terminal. FIG. 10 shows a data format of a monitor signal which is outputted from the parallel/serial converter 35. The parallel/serial converter 35 is designed to time-division multiplex monitor signals a1 through a4 shown in FIG. 10(a), and monitor signals b1 through b4 shown in FIG. 10(b), to obtain signals shown in FIG. 10(c). By time-division multiplexing as shown in the figure, the frequency (data rate) of the monitor signals is enhanced, so that it is possible to increase the amount of information per unit time. That is, it is possible to enhance the band width of the final monitor signal, and it is possible to carry out debug in a short time.

It is also possible to decrease the number of the monitoring terminals by the parallel/serial conversion, so that it is possible to inhibit the number of pins of the semiconductor integrated circuit from being increased. Furthermore, a parallel/serial converter for parallel/serial converting at least one of the output signals of the first and second signal selection circuits 31 and 32.

### (Seventh Preferred Embodiment)

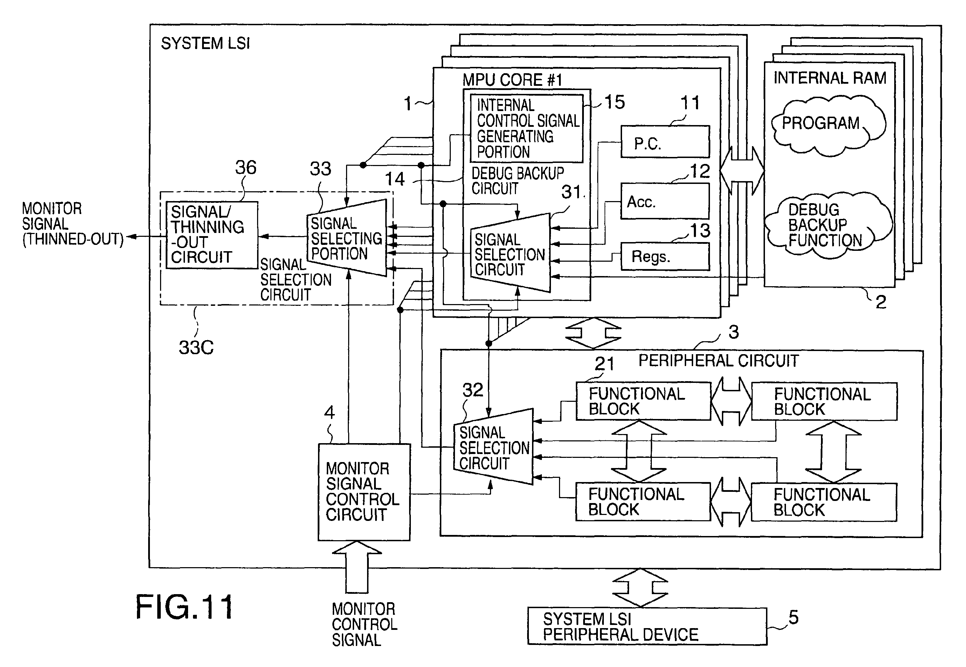

In place of the serial/parallel converter 34 in FIG. 8, a signal thinning-out circuit 36 in the seventh preferred embodiment shown in FIG. 11 may be provided. The signal thinning-out circuit 36 is designed to incorporate monitor signals at regular intervals to substantially lower the frequency (data rate) of the monitor signals without increasing the number of monitoring terminals. In FIG. 11, a third signal selection circuit 33C comprises a signal selecting portion 33, and a signal thinning-out circuit 36 for thinning out the output of the signal selecting portion 33.

Since the signal thinning-out circuit 36 incorporates only a part of the monitor signals, a part of information is missed, but it is possible to grasp the schematic variation in monitor signals. Therefore, this preferred embodiment is effective when it is intended to monitor a signal having a signal level varying in a long cycle.

Furthermore, a signal tinning-out circuit for substantially lowering the frequency (data rate) of at least one of the output signals of the first and second signal selection circuits 31 and 32 shown in FIG. 11 may be provided.

### (Eighth Preferred Embodiment)

In the above described preferred embodiments, the final monitor signal outputted from the signal selection circuit may be supplied to a terminal only for monitoring, which is provided in the system LSI, or may be supplied to a terminal which is used as an input terminal or an output terminal during usual operation.

If the terminal only for monitoring is provided, it is not required to switch the signal in the system LSI, so that it is possible to simplify the internal construction of the system LSI. If the terminal used as the input terminal or the output terminal during usual operation is commonly used, it is possible to monitor various signals without increasing the number of terminals of the system LSI. That is, it is possible to effectively utilize the terminals of the system LSI.

In the above described preferred embodiments, while the values of the program counter 11 in the MPU core 1, accumulator 12 and various registers 13 have been selected by the signal selection circuit, the concrete circuit block for analyzing the internal state of the MPU core 1 should not particularly been limited. Similarly, the concrete circuit block for analyzing the internal state of the peripheral circuit 3 should not particularly be limited.

As described above in detail, according to the present invention, it is possible to optionally select and output one of a signal, which is optionally selected from internal signals of the control circuit, such as a microprocessor, and a signal which is optionally selected from internal signals of the peripheral circuit. Therefore, it is possible to switch and output the monitor signal in real time, so that it is possible to enhance the efficiency of debug.

In addition, if the monitor signal is switched on the basis of the control signal from the processor circuit, it is possible to switch the monitor signal in accordance with the operation state of the processor circuit, so that it is possible to efficiently carry out debug even if the number of signals to be monitored is small.

While the present invention has been disclosed in terms of the preferred embodiment in order to facilitate better understanding thereof, it should be appreciated that the invention can be embodied in various ways without departing from the principle of the invention. Therefore, the invention should be understood to include all possible embodiments and modification to the shown embodiments which can be embodied without departing from the principle of the invention as set forth in the appended claims.

## Claims

1. A system LSI comprising:
a storage circuit in which at least one program has been stored;
at least one processor circuit for carrying out a processing operation in accordance with said program, said processor circuit having a program counter, at least one computing unit and at least one register; and
a peripheral circuit, capable of sending and receiving a signal to and from said processor circuit, for carrying out a predetermined logical operation in accordance with an input signal, said peripheral circuit having at least one functional block,
said system LSI further comprising:
selection means for optionally selecting one of the outputs of said program counter, said computing unit and said register in said processor circuit, at least one output of said storage circuit, and one of the outputs of a plurality of internal signals in said peripheral circuit including the output of said functional block; and
selection control means for controlling selection of a result signal from any operation process in any place of said processor circuit, said storage circuit and said peripheral circuit, on the basis of a selection signal which is supplied from the outside of said system LSI via an external terminal.

2. A system LSI as set forth in claim 1, wherein said processor circuit further comprises a debug backup circuit having an internal control signal generating portion for generating an internal control signal during a processing operation, and said selection means carries out a selecting operation on the basis of said internal control signal, which is generated by said internal control signal generating portion of said processor circuit, and said selection signal which is supplied from the outside.

3. A system LSI as set forth in claim 1, wherein said selection means comprises:
a first selection circuit, provided in said processor circuit, for optionally selecting and outputting at least one value of said program counter, said computing unit, said register and said storage circuit;
a second selection circuit, provided in said peripheral circuit, for optionally selecting and outputting one of a plurality of internal signals in said peripheral circuit, which include the output of said functional block; and
a third selection circuit for optionally selecting one of the outputs of said first and second selection circuits to output the selected one to the outside.

4. A system LSI as set forth in claim 3, wherein said processor circuit further comprises a debug backup circuit having an internal control signal generating portion for generating an internal control signal during a processing operation, and said first through third selection circuits carry out a selecting operation on the basis of said internal control signal, which is generated by said internal control signal generating portion of said processor circuit, and said selection signal which is supplied from the outside.

5. A system LSI as set forth in claim 3, which further comprises a plurality of processor circuits, each of which is said processor circuit according to claim 3, and
wherein said second selection circuit carries out a selecting operation on the basis of a control signal which is generated while each of said plurality of processor circuits is operating, and
said third selection circuit optionally selects one of the output of said first selection means and the output of said second selection means on the basis of a control signal, which is generates while each of said plurality of processor circuit is operating, and a control signal which is supplied from the outside, to output the selected output to the outside.

6. A system LSI as set forth in claim 5, wherein each of said plurality of processor circuits comprises a debug backup circuit having an internal control signal generating portion for generating an internal control signal during a processing operation, and said first through third selection circuits carry out a selecting operation on the basis of said internal control signal, which is generated by said internal control signal generating portion of each of said plurality of processor circuits, and said selection signal which is supplied from the outside.

7. A system LSI as set forth in claim 5, wherein at least one of said first, second and third selection circuits has a serial/parallel converter circuit for serial/parallel converting a selected signal to output the converted signal to the outside of said LSI.

8. A system LSI as set forth in claim 5, wherein at least one of said first, second and third selection circuits has a parallel/serial converter circuit for parallel/serial converting a selected signal to output the converted signal to the outside of said LSI.

9. A system LSI as set forth in claim 5, wherein at least one of said first, second and third selection circuits has a thinning-out circuit for thinning out selected signals at regular intervals to output the thinned-out signals to the outside of said LSI.

10. A system LSI as set forth in claim 1, wherein said LSI has a plurality of input/output terminals for sending and receiving signals to and from a system LSI peripheral device.

11. A system LSI as set forth in claim 10, wherein any one of said plurality of input/output terminals is used for inputting/outputting a monitor control signal for debug and a monitor signal.

12. A system LSI as set forth in claim 1, wherein said LSI further comprises an input terminal only for inputting a monitor control signal for debug, and an output terminal only for outputting the monitor signal after monitoring.
